# EUROPÄISCHE PATENTSCHRIFT

(11) **EP 3 591 359 B1**
(45) Veröffentlichungstag und Bekanntmachung des Hinweises auf die Patenterteilung: **17.09.2025**
(21) Anmeldenummer: 19020364.6
(22) Anmeldetag: 06.06.2019
(51) Int. Cl.: G01J 5/80, B21D 37/16, C21D 1/30, C21D 1/38, C21D 1/52, C21D 11/00, C22F 1/04, G01J 5/00, B21D 1/10, C21D 9/46

(54) **BERÜHRUNGSLOSES TEMPERATURMESSVERFAHREN UND BERÜHRUNGSLOSES TEMPERATURÜBERWACHUNGSVERFAHREN ZUM ERMITTELN EINER TEMPERATUR WÄHREND EINER WÄRMEBEHANDLUNG EINES WERKSTÜCKS, WÄRMEBEHANDLUNG EINES WERKSTÜCKS UND GERÄT FÜR EINE BERÜHRUNGSLOSE TEMPERATURMESSUNG**
CONTACTLESS TEMPERATURE MEASURING METHOD AND NON-CONTACT TEMPERATURE MONITORING METHOD FOR DETERMINING A TEMPERATURE DURING HEAT TREATMENT OF A WORKPIECE, HEAT TREATMENT OF A WORKPIECE AND DEVICE FOR CONTACTLESS TEMPERATURE MEASUREMENT
PROCÉDÉ DE MESURE DE TEMPÉRATURE SANS CONTACT ET PROCÉDÉ DE SURVEILLANCE DE TEMPÉRATURE SANS CONTACT PERMETTANT DE DÉTERMINER UNE TEMPÉRATURE LORS D'UN TRAITEMENT THERMIQUE D'UNE PIÈCE, TRAITEMENT THERMIQUE D'UNE PIÈCE ET APPAREIL DE MESURE DE TEMPÉRATURE SANS CONTACT

(30) Priorität: 08.06.2018 DE 102018113785
(43) Veröffentlichungstag der Anmeldung: 08.01.2020
(73) Patentinhaber: Linde GmbH, 82049 Pullach (DE)
(72) Erfinder: Steusloff, Ronald, 23992 Neukloster (DE); Ruh, Daniel, 8280 Kreuzlingen (CH); Gött, Gregor, 17491 Greifswald (DE); Uhrlandt, Dirk, 17498 Wackerow (DE)
(74) Vertreter: Lu, Jing

(56) Entgegenhaltungen:
- WO-A2-2004/069547
- DE-A1- 102007 051 688
- DE-A1- 19 522 642
- US-A- 4 373 657
- US-A- 5 769 540

## Beschreibung

Die Erfindung betrifft ein berührungsloses Temperaturmessverfahren, ein berührungsloses Temperaturüberwachungsverfahren zum Ermitteln einer Temperatur während einer Wärmebehandlung eines Metall-Werkstücks, eine Wärmebehandlung eines Metall-Werkstücks und ein Gerät für eine berührungslose Temperaturmessung.

Eine Wärmebehandlung eines Werkstücks, wie beispielsweise das Flammrichten eines Blechs, erfordert die Einhaltung bestimmter Temperaturbereiche, um eine Beschädigung des Werkstücks zu vermeiden. Eine solche Wärmebehandlung wird insbesondere beim Schiffbau, Fahrzeugbau, Kranbau oder in der metallverarbeitenden Industrie eingesetzt, um ein Metall-Werkstück zu richten. Eine Flammentemperatur beträgt ca. 3000°C, was problematisch ist, wenn das Werkstück auf nur ca. -600°C - 700°C erhitzt werden darf, da bei unsachgemäßer Handhabung Schäden entstehen können. Klassische Temperaturüberwachungsverfahren können bisher nicht durch strahlende Objekte hindurch detektieren. Daher werden bisher gut ausgebildete Mitarbeiter als Qualitätsüberwachung bei der Wärmebehandlung verwendet, um kritische Werkstücke z.B. im Schiffbau zu wärmen. Insbesondere die Temperatur der Oberfläche direkt im Bereich der Flamme wird meist nur grob auf der Grundlage der Glühfarbe des Metalls überwacht, was wenig reproduzierbar und ungenau ist und außerdem eine ständige Beobachtung erfordert.

Ein Verfahren zur berührungslosen Temperaturmessung an Werkstücken, die mit einer Wärmequelle behandelt werden, ist aus der DE102007051688 A1 bekannt. US 4 373 657 zeigt ein Verfahren zur Messung der Temperatur eines Schweissdrahts mittels eines Thermopaars. WO 2004/069547 A2 offenbart eine Thermokamera. DE 195 22 642 A1 befasst sich mit einem Verfahren zum Flammrichten metallischer Bauteile.

Bei Fehlern durch Nichteinhaltung der Temperatur müssen die beschädigten Werkstücke aufwendig repariert werden. Dadurch werden Kosten verursacht. Es ist eine Aufgabe der Erfindung, eine Überwachung des Erreichens der Mindesttemperatur bzw. allgemein der Temperatur bei der Wärmebehandlung des Werkstücks zu ermöglichen. Diese soll einfach und kostengünstig durchführbar sein.

Diese Aufgabe wird durch ein berührungsloses Temperaturmessverfahren mit den Merkmalen des Anspruchs 1, ein berührungsloses Temperaturüberwachungsverfahren zum Ermitteln einer Temperatur während einer Wärmebehandlung eines Werkstücks mit den Merkmalen des Anspruchs 9, eine Wärmebehandlung eines Werkstücks mit den Merkmalen des Anspruchs 10 und eine Vorrichtung für eine berührungslose Temperaturmessung mit den Merkmalen des Anspruchs 11 gelöst. Vorteilhafte Ausführungsformen sind in den abhängigen Ansprüchen angegeben.

Die Erfindung beschreibt Verfahren und ein Gerät, mittels denen eine berührungslose optische Überwachung einer Oberflächentemperatur des Werkstücks selbst in solchen Fällen ermöglicht wird, in denen der optische Zugang durch ein anderes selbst strahlendes Objekt, wie z. B. eine Flamme oder ein Plasma, gestört ist.

Erfindungsgemäß wird ein berührungsloses Temperaturmessverfahren zum Ermitteln einer Temperatur eines Abschnitts eines Werkstücks während einer Wärmebehandlung vorgeschlagen. Während der Wärmebehandlung wird der besagte Abschnitt mittels einer Wärmequelle erhitzt. Hierbei wird das Werkstück zumindest teilweise bedeckt. Das Temperaturmessverfahren weist folgende Verfahrensschritte auf: Erfassen, mittels eines ersten Sensors, einer elektromagnetischen Strahlung, welche von einem Raumbereich ausgesendet wird, welcher den Abschnitt des Werkstücks umfasst; Erfassen, mittels eines zweiten Sensors, einer elektromagnetischen Referenzstrahlung, welche von einem Referenzbereich ausgesendet wird, welcher zumindest einen Teil der Wärmequelle umfasst; und Ermitteln der Temperatur des Abschnitts des Werkstücks aus einem Vergleich der erfassten Strahlung und der erfassten Referenzstrahlung.

Mittels des berührungslosen Temperaturmessverfahrens ist die Überwachung des Erreichens der Mindesttemperatur möglich, so dass Maßnahmen gegen eine entstehende Nichteinhaltung der Temperatur getroffen werden können. Dabei sind eine einfache technische Umsetzbarkeit und eine einfache Installation und Bedienung gewährleistet. Die Sensoren können an dem zur Wärmebehandlung eingesetzten Gerät befestigt werden und benötigen lediglich Batterien oder eine anderweitige Stromversorgung. Dieses Verfahren ermöglicht die Durchführung der Wärmebehandlung ohne den gut ausgebildeten Mitarbeiter, der relativ teuer ist. Vielmehr kann die Wärmebehandlung auch von einer Person ohne spezielle Ausbildung oder Erfahrung durchgeführt werden. Hinzu kommt, dass es auch bei Einsatz gut ausgebildeten Mitarbeiters zu Beschädigungen des Werkstücks kommen kann, die mittels des erfindungsgemäßen Verfahrens verhindert oder zumindest reduziert werden. Daher fallen weiterhin Reparaturen- und Nacharbeitungskosten des Werkstücks weg, die zur Beseitigung entstandener Schäden notwendig sind. Dadurch, dass die Sensoren das Werkstück nicht berühren, können sie es weiterhin nicht schädigen. Die von den Sensoren erfassten Signale werden optisch erfasst.

Mittels des berührungslosen Temperaturmessverfahrens sind eine Messung einer Oberflächenstrahlung bzw. Strahlungsintensität von Oberflächenemissionen und eine spektrale Separation der Strahlung der Flamme oder des Plasmas von der Strahlung des Werkstückabschnitts möglich. Das Verfahren basiert daher auf der spektralen Selektion der Oberflächenstrahlung (Kontinuumstrahlung) des Werkstückabschnitts und einer in vorbestimmten Spektralbereichen dominanten Emission des störenden Objekts wie die Flamme des Plasmas. Der erste Sensor und der zweite Sensor sind bevorzugt spektralselektiv in ihrem Empfindlichkeitsbereich passend gewählt und kalibriert. Wenn der erste und/oder der zweite Sensor in ihrem Empfindlichkeitsbereich kalibriert sind, sind zwei Sensoren zur Durchführung des berührungslosen Temperaturmessverfahrens ausreichend. Der erste Sensor misst die elektromagnetische Strahlung, und der zweite Sensor misst die elektromagnetische Referenzstrahlung, die in Relation zueinander gesetzt werden, um die Temperatur zu ermitteln. Die Sensoren können für eine schmalbandige Messung ausgelegt sein.

In einer bevorzugten Ausführungsform wird der Abschnitt des Werkstücks während der Wärmebehandlung mittels einer elektrischen Entladung oder einer Flamme erhitzt. Bevorzugt wird der Abschnitt des Werkstücks mittels der Flamme erhitzt. Beispielsweise wird der Abschnitt des Werkstücks unter Verwendung eines Gasbrenners wie eines Acetylenbrenners erhitzt. Erfindungsgemäß umfasst der Raumbereich ebenfalls zumindest einen Teil der Wärmequelle, wobei der Referenzbereich einen größeren Teil der Wärmequelle umfasst, als der Raumbereich. Dadurch wird sichergestellt, dass das störende Objekt, also insbesondere die Flamme oder das Plasma, tatsächlich die Oberflächenstrahlung des Werkstückabschnitts beeinflusst, aber seine Strahlung auch separat erfasst wird.

In einer bevorzugten Ausführungsform umfasst das Erfassen der Strahlung mittels des ersten Sensors ein Erfassen eines Spektrums und/oder umfasst das Erfassen der Referenzstrahlung mittels des zweiten Sensors ein Erfassen eines Referenzspektrums. Dadurch kann die Messgenauigkeit erhöht werden. Bevorzugt umfasst das Erfassen der Strahlung mittels des ersten Sensors ein Erfassen einer Strahlenintensität und/oder umfasst das Erfassen der Referenzstrahlung mittels des zweiten Sensors ein Erfassen einer Referenzintensität. Die Strahlenintensität und die Referenzintensität stellen jeweils eine Intensität von Oberflächenemissionen dar. Das Erfassen der Strahlenintensität und/oder das Erfassen der Referenzintensität kann mittels einer geeigneten Kamera oder Spektrometers erfolgen. Bevorzugt erfolgt das Erfassen der Strahlenintensität und/oder das Erfassen der Referenzintensität mittels eines Photosensors. Der Photosensor ist bevorzugt in spezifisch gewählten Spektralbereichen empfindlich, beispielsweise im Infrarotbereich. Der Photosensor ist bevorzugt eine Photodiode. Bevorzugter werden als Sensoren mehrere Photodioden mit einstellbarem Verstärker verwendet, die mit unterschiedlichen Verstärkungen laufen. Bevorzugt sind die Photodioden spektral selektiv ausgebildet. Die Photodioden weisen bevorzugt Filter im IR-(Infrarot-)Bereich bevorzugter im Spektralbereich von 1100 bis 1300 nm auf.

Erfindungsgemäß erfolgt das Ermitteln der Temperatur des Abschnitts des Werkstücks aus dem Vergleich der erfassten Strahlung und der erfassten Referenzstrahlung mittels einer Quotienten- und/oder Mittelwertbildung.

Bevorzugter erfolgt das Ermitteln der Temperatur des Abschnitts des Werkstücks aus dem Vergleich der erfassten Strahlung und der erfassten Referenzstrahlung mittels einer Quotientenbildung. Relationen zwischen der Temperatur und erfasster von einer Oberfläche emittierter Strahlung sind bekannt.

In einer bevorzugten Ausführungsform werden/wird mittels eines oder mehrerer weiterer Sensoren eine oder mehrere weitere elektromagnetische Strahlung und/oder Referenzstrahlung erfasst, welche in den Vergleich beim Ermitteln der Temperatur des Abschnitts des Werkstücks mit berücksichtigt werden/wird. Je mehr Sensoren eingesetzt werden, desto genauer kann die Temperatur ermittelt werden. Zudem sind bei der Verwendung von mehr als zwei Sensoren keine kalibrierten Sensoren nötig. Vielmehr können die Sensoren ohne Kalibrierung in dem Temperaturmessverfahren verwendet werden.

Bevorzugt messen die mehreren Sensoren in unterschiedlichen Wellenlängen. Bevorzugt erfolgt das Erfassen der Strahlung mittels des ersten Sensors und/oder das Erfassen der Referenzstrahlung mittels des zweiten Sensors in einem Infrarotbereich. Bevorzugt wird ein IR-(Infrarot-)-Spektrum und/oder IR- (Infrarot-)-Referenzspektrum erfasst, in dem bzw. denen eine Strahlenintensität d.h. eine Intensität von Oberflächenemissionen als Funktion einer oder mehrerer von den Sensoren ausgesandten Wellenlängen im Infrarot- Bereich erfasst werden. Insbesondere im IR-Spektrum oberhalb von einer Wellenlänge von 900 nm und unterhalb einer Wellenlänge von 1700 nm können Strahlungsanteile des Werkstücks und des störenden Objekts wie der Flamme unterschieden werden.

Bevorzugt erfolgt das Erfassen der Strahlung mittels des ersten Sensors und/oder das Erfassen der Referenzstrahlung mittels des zweiten Sensors in einem Wellenlängenbereich von 1000 bis 1600 nm, bevorzugter 1100 bis 1350 nm. D.h., die Bandbreite des oder der Sensoren istgleich oder größer als der vorstehende Wellenzahlbereich. Die Bandbreite umfasst alle von der Lichtquelle des jeweiligen Sensors zum Detektor des jeweiligen Sensors gelangenden und im spektralen Empfindlichkeitsbereich des Detektors liegenden Wellenzahlen.

Die Erfindung betrifft ferner ein berührungsloses Temperaturüberwachungsverfahren zum fortlaufenden Überwachen einer Temperatur eines Abschnitts eines Werkstücks während einer Wärmebehandlung, während welcher der Abschnitt mittels einer Wärmequelle erhitzt wird, welche das Werkstück zumindest teilweise bedeckt, wobei das Temperaturüberwachungsverfahren folgende Verfahrensschritte aufweist: a) Erfassen einer elektromagnetischen Strahlung, welche von dem Abschnitt ausgesendet wird, mittels eines ersten Sensors; b) Erfassen einer elektromagnetischen Referenzstrahlung, welche von einem Referenzbereich ausgesendet wird, welcher zumindest einen Teil der Wärmequelle umfasst; und c) Ermitteln der Temperatur des Abschnitts des Werkstücks aus einem Vergleich der Strahlung und der Referenzstrahlung, wobei zumindest die Verfahrensschritte a) und c) während der Wärmebehandlung fortlaufend wiederholt werden.

Dadurch wird eine permanente Temperaturüberwachung während des Wärmebehandlungsverfahrens erzielt. Dadurch kann eine Beschädigung des Werkstücks während der Wärmebehandlung vermieden oder zumindest reduziert werden. Ferner ist mittels des berührungslosen Temperaturüberwachungsverfahrens eine Analyse einer zeitlichen Veränderung der Oberflächentemperatur des Werkstücks möglich. Erfindungsgemäß wird auch eine Wärmebehandlung eines Werkstücks vorgeschlagen, insbesondere ein Flammrichtverfahren, während welcher ein Abschnitt des Werkstücks mittels einer Wärmequelle erhitzt wird, welche das Werkstück zumindest teilweise bedeckt. Bei der Wärmebehandlung wird das berührungslose Temperaturüberwachungsverfahren gemäß einer oder mehrerer der vorstehend beschriebenen Ausführungsformen ausgeführt. Vorteilhafterweise wird die beim Temperaturüberwachungsverfahren ermittelte Temperatur fortlaufend mit einem vorgegebenen Temperaturschwellwert verglichen. Es gibt unterschiedliche Optionen, das Temperaturüberwachungsverfahren in die Wärmebehandlung zu integrieren. Beispielsweise kann die Wärmebehandlung so implementiert sein, dass das Erhitzen des Abschnitts des Werkstücks mittels der Wärmequelle beendet wird, wenn die ermittelte Temperatur des Abschnitts einen vorgegebenen Temperaturschwellwert erreicht hat. Alternativ kann vorgesehen sein, dass bei einem Annähern der ermittelten Temperatur an den vorgegebenen Temperaturschwellwert Signal oder eine Mitteilung an die Person erfolgt, welche die Wärmebehandlung durchführt, insbesondere die Wärmequelle bedient. Das Signal oder die Mitteilung kann beispielsweise einen optischen und/oder akustischen Warnhinweis umfassen, welcher insbesondere mitteilen kann, dass die Wärmequelle zu langsam bewegt wird und/oder zu nah am Werkstück geführt wird.

Die Wärmequelle kann eine Flamme oder ein Lichtbogen sein. Die Wärmequelle ist bevorzugt Teil einer Wärmebehandlungsvorrichtung wie ein Brenner, beispielsweise ein Gasbrenner. Bevorzugt ist der Brenner ein Acetylen- bzw. Acetylen-Sauerstoff-Brenner. Der Brenner kann ein Einflammen- oder Mehrflammenbrenner sein. Der Einflammen-Mehrfachbrenner basiert auf einem Einflammenbrenner, bei dem mehrere beispielsweise drei oder fünf Einzeldüsen, beispielsweise im Abstand von 30 mm bis 50 mm in Reihe angeordnet sind und über einen Injektor versorgt werden. Der Einflammen-Mehrfachbrenner ist bevorzugt umschaltbar ausgebildet. Der Einflammen-Mehrfachbrenner weist bevorzugt neben den Düsen Laufräder auf längenverstellbaren Führungsschienen auf, die eine konstante Brennerführung über das Werkstück erlauben.

Das Werkstück ist bevorzugt ein Blech. Der vorgegebene Temperaturschwellwert ist von einem Material des Werkstücks abhängig. Der vorgegebene Temperaturschwellwert liegt bevorzugt im Bereich von bis zu 700 °C, bevorzugter bis zu 600°C. Das Werkstück ist bevorzugt aus Stahl und/oder Aluminium gebildet. Bei Stahl liegt der vorgegebene Temperaturschwellwert bevorzugt im Bereich von 500-650°C. Bei Aluminium liegt der vorgegebene Temperaturschwellwert bevorzugt im Bereich von 300- 450°C.

Die Wärmebehandlung ist bevorzugt ein Flammrichten. Das Flammrichten ist ein gezieltes Erhitzen eines metallischen Werkstücks mittels einer Flamme, wobei ein Abschnitt des Werkstücks auf Flammrichttemperatur erwärmt wird. Ein Verzug, Verwerfungen, Verbiegungen und Verdrehungen des Werkstücks lassen sich mit der Flamme schnell, werkstoffschonend und sicher richten.

In einer bevorzugten Ausführungsform wird ein Warnhinweis ausgegeben, wenn die ermittelte Temperatur des Abschnitts einen vorgegebenen Vor-Temperaturschwellwert erreicht hat. Der vorgegebene Vor-Temperaturschwellwert ist kleiner als der vorgegebene Temperaturschwellwert. Dadurch wird weiterhin sichergestellt, dass das Werkstück während der Wärmebehandlung nicht beschädigt wird. Eine die Wärmebehandlung durchführende Person kann bei Ausgabe des Warnhinweises entscheiden, ob sie mit der Wärmebehandlung des Abschnitts fortfährt, die Wärmebehandlung unterbricht oder einen weiteren Abschnitt des Werkstücks anstelle des Abschnitts wärmebehandelt.

Erfindungsgemäß wird weiterhin ein Gerät für eine berührungslose Temperaturmessung zum Ermitteln einer Temperatur eines Abschnitts eines Werkstücks während einer Wärmebehandlung bereitgestellt, während welcher der Abschnitt mittels einer Wärmequelle erhitzt wird, welche das Werkstück zumindest teilweise bedeckt. Das Gerät weist auf: - Einen ersten Sensor, welcher ausgebildet ist, eine elektromagnetische Strahlung zu erfassen, welche von einem Raumbereich ausgesendet wird, welcher den Abschnitt des Werkstücks umfasst; - einen zweiten Sensor, welcher ausgebildet ist, eine elektromagnetische Referenzstrahlung zu erfassen, welche von einem Referenzbereich ausgesendet wird, welcher zumindest einen Teil der Wärmequelle umfasst; und - ein Verarbeitungsmodul, welches ausgebildet ist, die erfasste Strahlung und die erfasste Referenzstrahlung zu vergleichen und daraus die Temperatur des Abschnitts des Werkstücks zu ermitteln.

Das Gerät weist eine Sensoreinheit mit zwei Sensoren basierend auf optischen Messungen auf, z.B. mit spektral selektiven Photodioden. Bevorzugt sind der erste Sensor, der zweite Sensor und/oder das Verarbeitungsmodul in einem gemeinsamen Gehäuse untergebracht. Dadurch ist das Gerät kompakt, und es ist kein zweites Gerät notwendig, was separat justiert werden muss.

In einer bevorzugten Ausführungsform ist das Gerät ausgebildet, an einer Wärmebehandlungsvorrichtung befestigt zu werden. Bevorzugt ist die Wärmebehandlungsvorrichtung verstellbar ausgebildet. Beispielsweise ist die Wärmebehandlungsvorrichtung ein Gasbrenner wie ein Acetylenbrenner, der eine oder mehreren Düsen und Laufräder auf längenverstellbaren Führungsschienen aufweist, wobei das Gerät an den Führungsschienen montierbar ausgebildet ist. Beispielsweise weist das Gerät Verbindungselemente wie Schellen oder dgl. auf. Der Messbereich der Sensoren ist bevorzugt verschiebbar ausgebildet, um unterschiedliche Abschnitte zu erfassen.

Bevorzugt weist das Gerät eine Relativbewegungsmessvorrichtung auf, welche ausgebildet ist, eine Relativbewegung zwischen der Wärmebehandlungsvorrichtung und dem Werkstück zu ermitteln. In einer bevorzugten Ausführungsform weist das Gerät eine Steuereinrichtung auf, die eingerichtet und ausgebildet ist, einen Hinweis in Abhängigkeit der ermittelten Relativbewegung zu geben, ob die Wärmebehandlungsvorrichtung von einem Nutzer schneller oder langsamer bewegt werden soll.

Bevorzugt weist das Gerät eine Ausgabevorrichtung auf, die ausgelegt ist, bei Überschreiten der vorgegebenen Vor-Temperaturschwelle einen Warnhinweis auszugeben. Beispielsweise ist die Ausgabevorrichtung ein Lautsprecher zur Ausgabe eines akustischen Warnhinweises und/oder eine Anzeige, die ausgelegt ist, ein Warn-(Blink)licht anzuzeigen. In einer anderen bevorzugten Ausführungsform ist die Steuereinrichtung oder eine weitere Steuereinrichtung eingerichtet und ausgebildet, die Wärmebehandlung derart zu steuern, dass die Wärmequelle bei Überschreiten der vorgegebenen Temperaturschwelle abzuschalten. Der Hinweis, der in Abhängigkeit der ermittelten Relativbewegung gegeben wird, ist ebenfalls bevorzugt visuell und/oder akustisch von der Ausgabevorrichtung ausgebbar.

Zu dem berührungslosen Temperaturmessverfahren, berührungslosen Temperaturüberwachungsverfahren zum Ermitteln einer Temperatur während einer Wärmebehandlung eines Werkstücks, zu der Wärmebehandlung eines Werkstücks oder zu der Vorrichtung für eine berührungslose Temperaturmessung beschriebene Modifikationen und Ausführungsformen gelten auch jeweils für die anderen und umgekehrt.

Ein Ausführungsbeispiel der Erfindung ist in den Zeichnungen rein schematisch dargestellt und wird nachfolgend näher beschrieben. Es zeigt schematisch und nicht maßstabsgerecht
Fig. 1 ein erfindungsgemäßes Gerät während einer Wärmebehandlung eines Werkstücks;
Fig. 2 einen Vergleich von IR-Spektren einer Strahlungsintensität des in Fig. 1 gezeigten Werkstückabschnitts mit überlagertert Flamme, des in Fig.1 gezeigten Werkstückabschnitts ohne Flamme bzw. der Flamme allein als Funktion der Wellenlänge;
Fig. 3 einen weiteren Vergleich von IR-Spektren einer Strahlungsintensität des in Fig. 1 gezeigten Werkstückabschnitts mit überlagerter Brennerflamme und der Flamme allein als Funktion der Wellenlänge, und
Fig. 4 eine beispielhafte Wärmebehandlungsvorrichtung mit einem angebrachten Temperaturmessgerät gemäß einer Ausführungsform der Erfindung.

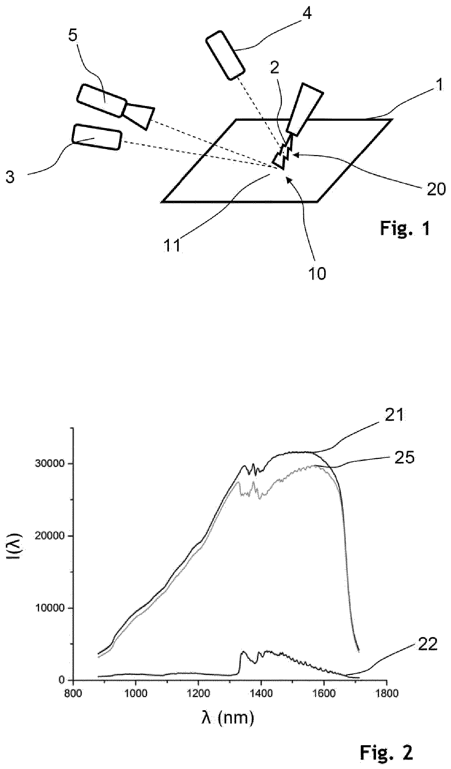

Fig. 1 zeigt ein erfindungsgemäßes Gerät während einer Wärmebehandlung eines Werkstücks. Das Gerät ist für eine berührungslose Temperaturmessung zum Ermitteln einer Temperatur eines Abschnitts 11 eines Werkstücks 1 während der Wärmebehandlung ausgelegt. Während der Wärmebehandlung wird der Abschnitt 11 mittels einer Wärmequelle 2 beispielsweise in Form einer Flamme erhitzt, welche das Werkstück 1 zumindest teilweise bedeckt. Das Werkstück 1 ist als Blech ausgebildet. Das Gerät weist einen ersten Sensor 3 auf, welcher ausgebildet ist, eine elektromagnetische Strahlung zu erfassen, welche von einem Raumbereich ausgesendet wird, welcher den Abschnitt 11 des Werkstücks 1 umfasst. Weiterhin weist das Gerät einen zweiten Sensor 4 auf, welcher ausgebildet ist, eine elektromagnetische Referenzstrahlung zu erfassen, welche von einem Referenzbereich 20 ausgesendet wird, welcher zumindest einen Teil der Wärmequelle 2 umfasst. Ein Verarbeitungsmodul (nicht gezeigt) des Geräts ist ausgebildet, die erfasste Strahlung und die erfasste Referenzstrahlung zu vergleichen und daraus die Temperatur des Abschnitts 11 des Werkstücks 1 zu ermitteln. Die ermittelte Temperatur kann dann ausgewertet werden, um beispielsweise Alarme und Signale auszugeben, wenn etwa bestimmte vorgegebene Grenztemperaturen erreicht werden. Ebenso könnte die Temperatur zur Steuerung einer Wärmequelle oder anderer Elemente verwendet werden, beispielsweise durch Begrenzen der Wärmezufuhr (z.B. Drosseln oder Abschalten einer Flamme) bei Erreichen einer Maximaltemperatur. Eine solche Steuerung kann vollautomatisch erfolgen oder durch Nutzereingaben bestätigt und durchgeführt werden.

In weiteren Ausführungsformen kann die Temperatur auch explizit dem Nutzer angezeigt werden, beispielsweise mittels eines geeigneten Displays direkt an dem Gerät. Ebenso ist es denkbar, die ermittelten Temperaturen und/oder die unverarbeiteten erfassten Strahlungswerte an eine andere Einheit weiterzuleiten, beispielsweise eine zentrale Steuerungseinheit für die Wärmebehandlung oder an einen Prozessor bzw. Computer, der dazu geeignet ist, diese Daten zu empfangen und zu verarbeiten, so dass dort die Temperatur entsprechend weiterverarbeitet und/oder angezeigt werden kann. Ebenso können Temperaturen auf diese Weise direkt im Temperaturmessgerät oder an anderer Stelle in einem nicht-flüchtigen Speicherelement gesammelt und abgespeichert werden, um beispielsweise eine Dokumentation und Kontrolle der Wärmebehandlung möglich zu machen. Auch eine drahtlose Übertragung der Messwerte und/oder der Temperaturen ist möglich, um eine entfernte Anzeige der aktuellen Temperatur in einem anderen Bereich komfortabel zu ermöglichen.

Weiterhin weist das Gerät eine Infrarotkamera 5 auf, welche ausgebildet ist, die elektromagnetische Strahlung zu erfassen, welche von dem Raumbereich 10 ausgesendet wird, welcher den Abschnitt 11 des Werkstücks 1 umfasst. Die von der Infrarotkamera 5 erfasste Strahlung wird in den vom Verarbeitungsmodul (nicht gezeigt) durchgeführten Vergleich mit einbezogen, um die Temperatur des Abschnitts 11 des Werkstücks 1 zu ermitteln.

Während der Wärmebehandlung des Werkstücks 1 wird mittels des Geräts ein berührungsloses Temperaturüberwachungsverfahren zum Ermitteln einer Temperatur des Abschnitts 11 des Werkstücks 1 während der Wärmebehandlung durchgeführt. Bei dem Temperaturmessverfahren werden mittels des ersten Sensors 3 und der Infrarotkamera 5 die elektromagnetische Strahlung erfasst, welche von dem Raumbereich 10 ausgesendet wird, und wird mittels des zweiten Sensors 4 die elektromagnetischen Referenzstrahlung erfasst, welche von dem Referenzbereich 20 ausgesendet wird, und wird die Temperatur des Abschnitts 11 des Werkstücks 1 aus einem Vergleich der erfassten Strahlung und der erfassten Referenzstrahlung ermittelt. Das Erhitzen des Abschnitts 11 des Werkstücks 1 mittels der Wärmequelle 2 kann beendet werden, wenn die ermittelte Temperatur des Abschnitts 11 einen vorgegebenen Temperaturschwellwert erreicht hat. Falls an dem Temperaturmessgerät geeignete Module vorhanden sind, kann die so ermittelte Temperatur auch explizit angezeigt werden, beispielsweise um dem Nutzer eine komfortable Überwachung der erreichten Temperaturbereiche zu ermöglichen. Dabei kann es sich um ein einzelnes Anzeigeelement speziell für die Temperaturanzeige handeln oder auch um eine Multifunktionsanzeige, z.B. einen Bildschirm mit verschiedenen Anzeigebereichen und Funktionen. Ebenso kann die ermittelte Temperatur und/oder andere Messdaten (z.B. die Strahlungsintensitäten bzw. Spektren) an eine andere Vorrichtung weiter übermittelt werden, wo sie dann angezeigt oder verarbeitet werden.

Fig. 2 zeigt einen Vergleich von IR-Spektren einer Strahlungsintensität des in Fig. 1 gezeigten Werkstückabschnitts mit überlagerter Flamme, des in Fig.1 gezeigten Werkstückabschnitts ohne Flamme bzw. der Flamme allein als Funktion der Wellenlänge. Die Einheit der Intensität I ist willkürlich gewählt und nicht kalibriert. Gezeigt ist die Intensität I als Funktion der Wellenlänge λ. Das Spektrum des Werkstückabschnitts mit überlagerter Brennerflamme, d.h. von Flamme und Werkstückabschnitt ist mit dem Bezugszeichen 21 gekennzeichnet. Das Spektrum vom Werkstückabschnitt ist mit Bezugszeichen 25 gekennzeichnet. Das Spektrum der Flamme bzw. Referenzspektrum ist mit Bezugszeichen 22 gekennzeichnet. Wie aus Fig. 2 ersichtlich, steigt die Strahlungsintensität der Flamme alleine, die mit dem Bezugszeichen 22 gekennzeichnet ist, ab einer Wellenlänge von ca. 1350 nm vergleichsweise leicht an und nimmt ab einer Wellenlänge von ca. 1450 nm stetig ab.

Das Spektrum vom Werkstückabschnitt, das mit dem Bezugszeichen 25 gekennzeichnet ist, steigt ab einer Wellenlänge von ca. 900 nm annähernd linear an, hat im Bereich einer Wellenlänge von ca 1380 nm bis ca. 1.500 nm eine Senke, zwischen ca. 1500 nm und 1700 nm einen annähernd linearen Anstieg und fällt dann ab. Die Strahlungsintensität des Werkstückabschnitts mit überlagerter Flamme, die mit dem Bezugszeichen 21 gekennzeichnet ist, entspricht einer Summe der mit 22 und 25 gekennzeichneten Strahlungsintensitäten.

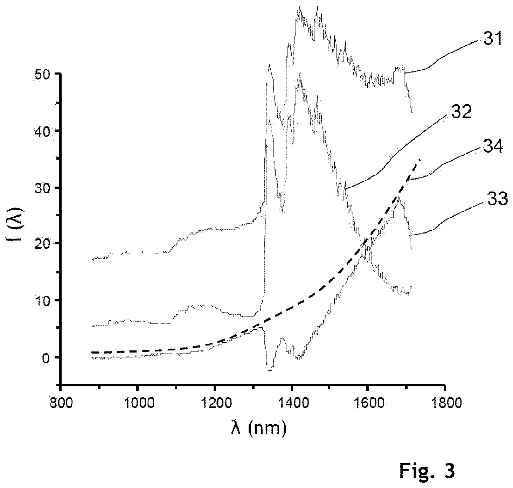

Fig. 3 zeigt einen Vergleich von IR-Spektren einer Strahlungsintensität des in Fig. 1 gezeigten Werkstückabschnitts mit überlagerter Flamme und der Flamme allein, gemessen mittels eines IR-Spektrometers. Die Einheit der Intensität I ist willkürlich gewählt. Gezeigt ist die Intensität I als Funktion der Wellenlänge λ . Das Spektrum des Werkstückabschnitts mit überlagerter Flamme bzw. von Flamme und Werkstückabschnitt ist mit dem Bezugszeichen 31 gekennzeichnet. Das Spektrum der Flamme bzw. Referenzspektrum ist mit Bezugszeichen 32 gekennzeichnet. Das Differenzspektrum d.h. die Differenz der Strahlungsintensitäten der mit den Bezugszeichen 31 und 32 gekennzeichneten Spektren ist mit Bezugszeichen 33 gekennzeichnet. Mit dem Bezugszeichen 34 ist eine Modellkurve der Differenz (d.h. Werkstückabschnittstrahlung) mit einer Planckfunktion gekennzeichnet.

Wie aus Fig. 3 ersichtlich, ist ein Einfluss der Flamme auf die Strahlungsintensität bis zu einer Wellenlänge von 1350 nm relativ klein und ab der Wellenlänge von ca. 1350 bis 1700 nm relativ groß. Es gibt daher einen Bereich starker Störstrahlung der Flamme von ca. 1350 bis 1700 nm. Im IR- Spektrum oberhalb von einer Wellenlänge von 900 nm können Strahlungsanteile des Werkstückabschnitts und der Flamme unterschieden werden. Zwischen den Wellenlängen von 1100 bis 1300 nm lässt sich ein Differenzsignal zwischen Gesamtstrahlung und Flammenstrahlung sehr gut auswerten.

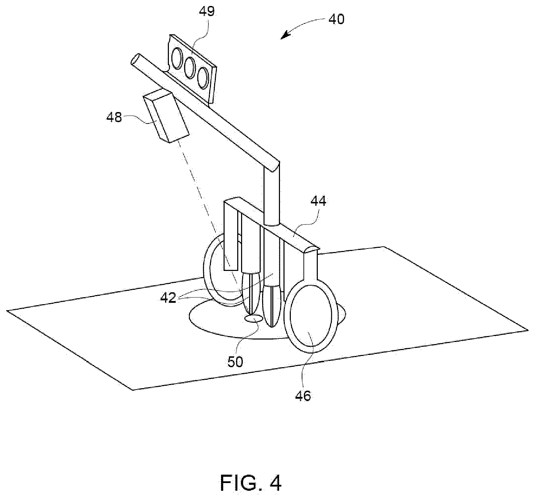

Figur 4 zeigt ein beispielhaftes Brennersystem 40 mit einem Temperaturmessgerät 48 gemäß einer Ausführungsform der Erfindung. Im vorliegenden Fall ist ein Einflammen-Mehrfachbrenner gezeigt, der beispielsweise mehrere Einzeldüsen 42 oder andere Brennelemente aufweisen kann. Die Einzeldüsen 42 sind parallel nebeneinander an einem entsprechenden Verteilergestell 44 angeordnet, das weitere Elemente wie Laufräder 46 für Führungsschienen aufweisen kann. Auf diese Weise können die Einzeldüsen 42 gleichmäßig und kontinuierlich über eine Strecke geführt werden, die erwärmt werden soll.

Das Temperaturmessgerät 48 ist in dieser Ausführungsform als Zusatzmodul auf geeignete Weise am Brenner befestigt, beispielsweise im Bereich eines Haltegriffs oder einer starren Zuleitung. Das Messgerät kann beispielsweise mit einem einfachen Verbindungselement an dem Haltegriff befestigt werden oder darauf aufgeschoben werden. Es ist aber auch denkbar, ein solches Temperaturmessgerät 48 und die dafür notwendigen Sensoren direkt als integrale Einheit zusammen mit einer Wärmequelle, z.B. einem entsprechenden Brennersystem 40, auszubilden. Dabei kann das Temperaturmessgerät sehr kompakt ausgeführt werden und damit problemlos mit anderen Vorrichtungen integriert werden.

Das Temperaturmessgerät 48 kann so angebracht und angeordnet sein, dass es mindestens in einem begrenzten Bereich verschiebbar oder beweglich ist, um unterschiedliche Abschnitte des Werkstücks für Messungen zu erfassen. Je nach Ausstattung können hier auch weitere Anzeigelemente 49 und Sensoren genutzt werden, um z.B. dem Nutzer eine Übersicht über die Wärmeverteilung in mehreren Bereichen bieten zu können. Alternativ kann das Messgerät so fixierbar sein, dass mindestens der Bereich 50 des Werkstücks direkt unterhalb der Flamme, also der Bereich mit der erwarteten höchsten Oberflächentemperatur, erfasst wird. Da das System in der Lage ist, den Einfluss der Flamme bzw. der Wärmequelle selbst abzuziehen, kann so eine zuverlässige Messung der relevanten Oberflächentemperaturen erfolgen. Wie bereits beschrieben, kann das Messgerät dazu beispielsweise optische oder akustische Signale ausgeben, z.B. in Form von roten und grünen Signalen zur Anzeige von erwünschten und nicht erwünschten Temperaturbereichen auf den Anzeigeelementen 49, oder kann direkt die Temperaturwerte als Messwert numerisch ausgeben und anzeigen. Alle möglichen Anzeige- und Signalvarianten können auch miteinander kombiniert werden.

Alternativ kann das Messgerät auch unabhänigig vom Brennersystem 40 fixiert werden.

Bevorzugt kann ein solches Temperaturmessgerät 48 beispielsweise durch Batterien oder Akkus betrieben werden, ohne von einer externen Stromquelle abhängig zu sein, so dass es mobil in jeder Umgebung einsetzbar ist. Ebenso ist es aber möglich, die Versorgung z.B. in eine andere Vorrichtung zu integrieren oder das Temperaturmessgerät entsprechend über Kabel zu versorgen.

Das Gerät kann für alle metallischen Werkstoffe verwendet werden, insbesondere für alle geeigneten Stahl- und Aluminiumlegierungen.

Generell sind Verfahren und Geräte gemäß der Erfindung für alle Wärmebehandlungsprozesse nutzbar, bei denen eine definierte Erwärmung und damit eine Information über die aktuelle Temperatur im erwärmten Bereich sinnvoll ist. Dies können beispielsweise neben dem bereits beschriebenen Flammrichten verschiedene Verfahren zum Vorwärmen und Nachwärmen von Werkstücken sein, Warmumformen, Löten, Flammhärten, Flammspritzen, Brenn- und Schmelzschneiden und weitere. Je nach Verfahren sind dabei erforderliche Mindesttemperaturen und/oder Maximaltemperaturen von Interesse und können entsprechend durch Messungen überwacht werden. Optional ist in all diesen Fällen eine temperaturabhängige automatische Steuerung möglich und oder die erreichten Temperaturen können dem Nutzer angezeigt werden. Beispielsweise sind beim Vorwärmen von Bauteilen präzise Temperaturregelungen und gleichmäßige Wärmeverteilungen erforderlich, die mit einer Temperaturmessvorrichtung gemäß der Erfindung sinnvoll überwacht werden können. Schließlich ist die Erfindung nicht auf spezifische Brennertypen, wie Einflammen-Mehrfachbrenner, beschränkt.

### Bezugszeichenliste:

1 Werkstück
10 Raumbereich
11 Werkstückabschnitt
2 Wärmequelle, Flamme
20 Referenzbereich
3 erster Sensor
4 zweiter Sensor
5 Infrarotkamera
21 Spektrum von Flamme und Werkstückabschnitt
22 Spektrum der Flamme, Referenzspektrum
25 Spektrum vom Werkstückabschnitt
31 Spektrum von Flamme und Werkstückabschnitt
32 Spektrum der Flamme, Referenzspektrum
33 Differenzspektrum
34 Modellkurve
40 Brennersystem
42 Einzeldüsen
44 Verteilergestell
46 Laufräder
48 Temperaturmessgerät
49 Anzeigelemente
50 Werkstückbereich

## Patentansprüche

1. Berührungsloses Temperaturmessverfahren zum Ermitteln einer Temperatur eines Abschnitts (11) eines Metall-Werkstücks (1) während einer Wärmebehandlung, während welcher der Abschnitt (11) mittels einer Wärmequelle (2) erhitzt wird, wobei die Wärmeauelle selbst strahlend ist und das Metall Werkstück zumindest teilweise bedeckt, wobei das Temperaturmessverfahren folgende Verfahrensschritte aufweist:
a) Erfassen, mittels eines ersten Sensors (3), einer elektromagnetischen Strahlung, welche von einem Raumbereich (10) ausgesendet wird, welcher den Abschnitt (11) des Metall- Werkstücks (1) umfasst, wobei der Raumbereich ebenfalls zumindest einen Teil der Wärmequelle (2) umfasst;
b) Erfassen, mittels eines zweiten Sensors (4), einer elektromagnetischen Referenzstrahlung, welche von einem Referenzbereich (20) ausgesendet wird, welcher zumindest einen Teil der Wärmequelle (2) umfasst, wobei der Referenzbereich einen größeren Teil der Wärmequelle (2) umfasst, als der Raumbereich; und
c) Ermitteln der Temperatur des Abschnitts (11) des Metall- Werkstücks (1) aus einem Vergleich der erfassten Strahlung und der erfassten Referenzstrahlung, wobei das Ermitteln der Temperatur des Abschnitts (11) des Werkstücks (1) aus dem Vergleich der erfassten Strahlung und der erfassten Referenzstrahlung mittels einer Quotienten- und/ oder Mittelwertbildung erfolgt.

2. Temperaturmessverfahren nach Anspruch 1, **dadurch gekennzeichnet, dass** der Abschnitt (11) des Metall-(1) während der Wärmebehandlung mittels einer elektrischen Entladung oder einer Flamme erhitzt wird.

3. Temperaturmessverfahren nach einem der vorangehenden Ansprüche, **dadurch gekennzeichnet, dass** das Erfassen der Strahlung mittels des ersten Sensors (3) ein Erfassen eines Spektrums umfasst und/oder dass das Erfassen der Referenzstrahlung mittels des zweiten Sensors (4) ein Erfassen eines Referenzspektrums umfasst.

4. Temperaturmessverfahren nach einem der vorangehenden Ansprüche, **dadurch gekennzeichnet, dass** das Erfassen der Strahlung mittels des ersten Sensors (3) ein Erfassen einer Strahlenintensität umfasst und/oder dass das Erfassen der Referenzstrahlung mittels des zweiten Sensors (4) ein Erfassen einer Referenzintensität umfasst.

5. Temperaturmessverfahren nach Anspruch 4, **dadurch gekennzeichnet, dass** das Erfassen der Strahlenintensität und/oder das Erfassen der Referenzintensität mittels eines Photosensors erfolgt.

6. Temperaturmessverfahren nach einem der vorangehenden Ansprüche,
**dadurch gekennzeichnet, dass** mittels eines oder mehrerer weiterer Sensoren eine oder mehrere weitere elektromagnetische Strahlung und/oder
Referenzstrahlung erfasst werden/wird, welche in den Vergleich beim Ermitteln der Temperatur des Abschnitts (11) des Metall-Werkstücks (1) mit berücksichtigt werden/wird.

7. Temperaturmessverfahren nach einem der vorangehenden Ansprüche,
**dadurch gekennzeichnet, dass** das Erfassen der Strahlung mittels des ersten Sensors (3) und/oder das Erfassen der Referenzstrahlung mittels des zweiten Sensors (4) in einem Infrarotbereich erfolgt.

8. Temperaturmessverfahren nach einem der vorhergehenden Ansprüche, wobei das Verfahren weiter das Anzeigen der ermittelten Temperatur des Abschnitts des Metall-Werkstücks auf einem Anzeigeelement (49) oder das Weiterleiten der ermittelten Temperatur an eine weitere Vorrichtung umfasst.

9. Berührunasloses Temperaturüberwachunasverfahren zum fortlaufenden Überwachen einer Temperatur eines Abschnitts eines Metall-Werkstücks während einer Wärmebehandlung, während welcher der Abschnitt mittels einer Wärmequelle erhitzt wird, wobei die Wärmequelle die Wärmequelle selbst strahlend ist und welche das Metall-Werkstück zumindest teilweise bedeckt,
wobei die Temperatur mit einem Verfahren nach Anspruch 1 bestimmt wird, und
wobei zumindest die Verfahrensschritte a) und c) während der Wärmebehandlung fortlaufend wiederholt werden.

10. Wärmebehandlung eines Metall-Werkstücks, insbesondere Flammrichtverfahren während welcher ein Abschnitt des Metall-Werkstücks mittels einer Wärmequelle erhitzt wird, welche das Metall-Werkstück zumindest teilweise bedeckt. **gekennzeichnet durch** ein berührungsloses Temperaturüberwachungsverfahren gemäß Anspruch 9.

11. Gerät für eine berührungslose Temperaturmessung zum Ermitteln einer Temperatur eines Abschnitts (11) eines Metall-Werkstücks (1) während einer Wärmebehandlung während welcher der Abschnitt (11) mittels einer Wärmequelle (2) erhitzt wird, wobei die Wärmequelle selbst strahlend ist und das Metall-Werkstück (1) zumindest teilweise bedeckt, aufweisend:
- einen ersten Sensor (3), welcher ausgebildet ist, eine elektromagnetische Strahlung zu erfassen, welche von einem Raumbereich (10) ausgesendet wird, welcher den Abschnitt (11) des Metall- Werkstücks (1) umfasst, wobei der Raumbereich ebenfalls zumindest einen Teil der Wärmequelle (2) umfasst;
- einen zweiten Sensor (4), welcher ausgebildet ist, eine elektromagnetischen Referenzstrahlung zu erfassen, welche von einem Referenzbereich (20) ausgesendet wird, welcher zumindest einen Teil der Wärmeauelle (2) umfasst, wobei der Referenzbereich einen größeren Teil der Wärmequelle (2) umfasst, als der Raumbereich; und
- ein Verarbeitungsmodul, welches ausgebildet ist, die erfasste Strahlung und die erfasste Referenzstrahlung zu vergleichen und daraus die Temperatur des Abschnitts (11) des Metall-Werkstücks (1) zu ermitteln, wobei das Ermitteln der Temperatur des Abschnitts (11) des Metall-Werkstücks (1) aus dem Vergleich der erfassten Strahlung und der erfassten Referenzstrahlung mittels einer Quotienten- und/ oder Mittelwertbildung erfolg.

12. Gerät nach Anspruch 11, **dadurch gekennzeichnet, dass** der erste Sensor (3), der zweite Sensor (4) und/oder das Verarbeitungsmodul in einem gemeinsamen Gehäuse untergebracht sind.

13. Gerät nach Anspruch 11 oder 12, **dadurch gekennzeichnet, dass** das Gerät (48 49) ausgebildet ist, an einer Wärmebehandlungsvorrichtung (40) befestigt zu werden.

14. Gerät nach Anspruch 13, **gekennzeichnet durch** eine Relativbewegungsmessvorrichtung, welche ausgebildet ist, eine Relativbewegung zwischen der Wärmebehandlungsvorrichtung und dem Metall- Werkstück zu ermitteln.

## Claims

1. Contactless temperature measuring method for determining a temperature of a portion (11) of a metal workpiece (1) during a heat treatment during which the portion (11) is heated by means of a heat source (2), wherein the heat source itself is radiant and at least partly covers the metal workpiece, wherein the temperature measuring method comprises the following method steps:
a) detecting, by means of a first sensor (3), electromagnetic radiation which is emitted from a spatial region (10) comprising the portion (11) of the metal workpiece (1), wherein the spatial region also comprises at least part of the heat source (2);
b) detecting, by means of a second sensor (4), electromagnetic reference radiation which is emitted by a reference region (20) comprising at least part of the heat source (2), wherein the reference region comprises a larger part of the heat source (2) than the spatial region; and
c) determining the temperature of the portion (11) of the metal workpiece (1) from a comparison of the detected radiation and the detected reference radiation, wherein the temperature of the portion (11) of the workpiece (1) is determined from the comparison of the detected radiation and the detected reference radiation by means of calculating a quotient and/or an average.

2. Temperature measuring method according to claim 1,
**characterized in that** the portion (11) of the metal (1) is heated during the heat treatment by means of an electric discharge or a flame.

3. Temperature measuring method according to either of the preceding claims, **characterized in that** detecting the radiation by means of the first sensor (3) comprises detecting a spectrum, **and/or in that** detecting the reference radiation by means of the second sensor (4) comprises detecting a reference spectrum.

4. Temperature measuring method according to any of the preceding claims, **characterized in that** detecting the radiation by means of the first sensor (3) comprises detecting a beam intensity **and/or in that** detecting the reference radiation by means of the second sensor (4) comprises detecting a reference intensity.

5. Temperature measuring method according to claim 4,
**characterized in that** the beam intensity is detected and/or the reference intensity is detected by means of a photosensor.

6. Temperature measuring method according to any of the preceding claims, **characterized in that** further electromagnetic radiation and/or reference radiation is/are detected by means of one or more further sensors, which radiation is/are taken into account in the comparison when determining the temperature of the portion (11) of the metal workpiece (1).

7. Temperature measuring method according to any of the preceding claims, **characterized in that** the radiation is detected by means of the first sensor (3) and/or the reference radiation is detected by means of the second sensor (4) in an infrared range.

8. Temperature measuring method according to any of the preceding claims, wherein the method further comprises displaying the determined temperature of the portion of the metal workpiece on a display element (49) or forwarding the determined temperature to a further device.

9. Contactless temperature monitoring method for continuously monitoring a temperature of a portion of a metal workpiece during a heat treatment during which the portion is heated by means of a heat source, wherein the heat source the heat source itself is radiant and at least partly covers the metal workpiece, wherein the temperature is ascertained using a method according to claim 1, and wherein at least method steps a) and c) are continuously repeated during the heat treatment.

10. Heat treatment of a metal workpiece, in particular a flame-straightening method, during which a portion of the metal workpiece is heated by means of a heat source which at least partly covers the metal workpiece, **characterized by** a contactless temperature monitoring method according to claim 9.

11. Contactless temperature measurement apparatus for determining a temperature of a portion (11) of a metal workpiece (1) during a heat treatment during which the portion (11) is heated by means of a heat source (2), wherein the heat source itself is radiant and at least partly covers the metal workpiece (1), the apparatus comprising:
- a first sensor (3) which is designed to detect electromagnetic radiation which is emitted from a spatial region (10) comprising the portion (11) of the metal workpiece (1), wherein the spatial region also comprises at least part of the heat source (2);
- a second sensor (4) which is designed to detect electromagnetic reference radiation which is emitted by a reference region (20) comprising at least part of the heat source (2), wherein the reference region comprises a larger part of the heat source (2) than the spatial region; and
- a processing module which is designed to compare the detected radiation and the detected reference radiation and to determine the temperature of the portion (11) of the metal workpiece (1) therefrom, wherein the temperature of the portion (11) of the metal workpiece (1) is determined from the comparison of the detected radiation and the detected reference radiation by means of calculating a quotient and/or an average.

12. Apparatus according to claim 11, **characterized in that** the first sensor (3), the second sensor (4) and/or the processing module are accommodated in a common housing.

13. Apparatus according to claim 11 or 12, **characterized in that** the apparatus (48, 49) is designed to be attached to a heat treatment device (40).

14. Apparatus according to claim 13, **characterized by** a relative movement measuring device which is designed to determine a relative movement between the heat treatment device and the metal workpiece.

## Revendications

1. Procédé de mesure de température sans contact permettant de déterminer une température d'une section (11) d'une pièce métallique (1) pendant un traitement thermique pendant lequel la section (11) est chauffée au moyen d'une source de chaleur (2), dans lequel la source de chaleur est elle-même rayonnante et recouvre au moins partiellement la pièce métallique, dans lequel le procédé de mesure de température présente les étapes de procédé suivantes :
a) détection, au moyen d'un premier capteur (3), d'un rayonnement électromagnétique émis par une zone spatiale (10) comprenant la section (11) de la pièce métallique (1), dans lequel la zone spatiale comprend également au moins une partie de la source de chaleur (2) ;
b) détection, au moyen d'un second capteur (4), d'un rayonnement électromagnétique de référence émis par une zone de référence (20) comprenant au moins une partie de la source de chaleur (2), dans lequel la zone de référence comprend une plus grande partie de la source de chaleur (2) que la zone spatiale ; et
c) détermination de la température de la section (11) de la pièce métallique (1) à partir d'une comparaison du rayonnement détecté et du rayonnement de référence détecté, dans lequel la détermination de la température de la section (11) de la pièce (1) à partir de la comparaison du rayonnement détecté et du rayonnement de référence détecté est effectuée au moyen d'une formation de quotient et/ou de valeur moyenne.

2. Procédé de mesure de température selon la revendication 1,
**caractérisé en ce que** la section (11) du métal (1) est chauffée au moyen d'une décharge électrique ou d'une flamme pendant le traitement thermique.

3. Procédé de mesure de température selon l'une des revendications précédentes, **caractérisé en ce que** la détection du rayonnement au moyen du premier capteur (3) comprend une détection d'un spectre **et/ou en ce que** la détection du rayonnement de référence au moyen du second capteur (4) comprend une détection d'un spectre de référence.

4. Procédé de mesure de température selon l'une des revendications précédentes, **caractérisé en ce que** la détection du rayonnement au moyen du premier capteur (3) comprend une détection d'une intensité de rayonnement **et/ou en ce que** la détection du rayonnement de référence au moyen du second capteur (4) comprend une détection d'une intensité de référence.

5. Procédé de mesure de température selon la revendication 4, **caractérisé en ce que** la détection de l'intensité de rayonnement et/ou la détection de l'intensité de référence sont effectuées au moyen d'un photocapteur.

6. Procédé de mesure de température selon l'une des revendications précédentes, **caractérisé en ce qu'un** ou plusieurs autres rayonnements électromagnétiques et/ou rayonnements de référence sont détectés au moyen d'un ou de plusieurs autres capteurs, lesquels autres rayonnements sont pris en compte dans la comparaison lors de la détermination de la température de la section (11) de la pièce métallique (1).

7. Procédé de mesure de température selon l'une des revendications précédentes, **caractérisé en ce que** la détection du rayonnement au moyen du premier capteur (3) et/ou la détection du rayonnement de référence au moyen du second capteur (4) sont effectuées dans une zone infrarouge.

8. Procédé de mesure de température selon l'une des revendications précédentes, dans lequel le procédé comprend en outre l'affichage de la température déterminée de la section de la pièce métallique sur un élément d'affichage (49) ou le transfert de la température déterminée à un autre dispositif.

9. Procédé de surveillance de température sans contact permettant de surveiller en continu une température d'une section d'une pièce métallique pendant un traitement thermique pendant lequel la section est chauffée au moyen d'une source de chaleur, dans lequel la source de chaleur la source de chaleur est elle-même rayonnante et recouvre au moins partiellement la pièce métallique, dans lequel la température est déterminée par un procédé selon la revendication 1, et dans lequel au moins les étapes de procédé a) et c) sont répétées en continu pendant le traitement thermique.

10. Traitement thermique d'une pièce métallique, en particulier procédé de redressage à la flamme, pendant lequel une section de la pièce métallique est chauffée au moyen d'une source de chaleur qui recouvre au moins partiellement la pièce métallique, **caractérisé par** un procédé de surveillance de température sans contact selon la revendication 9.

11. Appareil pour une mesure de température sans contact permettant de déterminer une température d'une section (11) d'une pièce métallique (1) pendant un traitement thermique pendant lequel la section (11) est chauffée au moyen d'une source de chaleur (2), dans lequel la source de chaleur est elle-même rayonnante et recouvre au moins partiellement la pièce métallique (1), présentant :
- un premier capteur (3) qui est configuré pour détecter un rayonnement électromagnétique émis par une zone spatiale (10) comprenant la section (11) de la pièce métallique (1), dans lequel la zone spatiale comprend également au moins une partie de la source de chaleur (2) ;
- un second capteur (4) qui est configuré pour détecter un rayonnement électromagnétique de référence émis par une zone de référence (20) comprenant au moins une partie de la source de chaleur (2), dans lequel la zone de référence comprend une plus grande partie de la source de chaleur (2) que la zone spatiale ; et
- un module de traitement qui est configuré pour comparer le rayonnement détecté et le rayonnement de référence détecté et pour déterminer, à partir de la comparaison, la température de la section (11) de la pièce métallique (1), dans lequel la détermination de la température de la section (11) de la pièce métallique (1) à partir de la comparaison du rayonnement détecté et du rayonnement de référence détecté est effectuée au moyen d'une formation de quotient et/ou de valeur moyenne.

12. Appareil selon la revendication 11, **caractérisé en ce que** le premier capteur (3), le second capteur (4) et/ou le module de traitement sont logés dans un boîtier commun.

13. Appareil selon la revendication 11 ou 12, **caractérisé en ce que** l'appareil (48, 49) est configuré pour être fixé à un dispositif de traitement thermique (40).

14. Appareil selon la revendication 13, **caractérisé par** un dispositif de mesure de mouvement relatif qui est configuré pour déterminer un mouvement relatif entre le dispositif de traitement thermique et la pièce métallique.
